# EUROPEAN PATENT APPLICATION

(11) **EP 4 822 759 A1**
(43) Date of publication of application: **14.10.2026**
(21) Application number: 26155637.7
(22) Date of filing: 02.02.2026
(51) Int. Cl.: H01M 4/133, H01M 4/134, H01M 4/36, H01M 4/38, H01M 4/587, H01M 4/62

(54) **NEGATIVE ELECTRODE ACTIVE MATERIAL, NEGATIVE ELECTRODE INCLUDING THE SAME, AND METHOD FOR MANUFACTURING THE SAME**

(30) Priority: 08.04.2025 KR 20250045483
(71) Applicant: SAMSUNG SDI CO., LTD., Yongin-si, Gyeonggi-do 17084 (KR)
(72) Inventor: OH, Doori, 17084 Gyeonggi-do (KR); KANG, Eunji, 17084 Gyeonggi-do (KR); NAH, JAEHOU, 17084 Gyeonggi-do (KR); KIM, YOUNGUGK, 17084 Gyeonggi-do (KR); KIM, Deok-Hyun, 17084 Gyeonggi-do (KR); KIM, Hyejin, 17084 Gyeonggi-do (KR); KIM, Jaewon, 17084 Gyeonggi-do (KR); LEE, Banseok, 17084 Gyeonggi-do (KR); KIM, Yookyung, 17084 Gyeonggi-do (KR); KIM, Chaewon, 17084 Gyeonggi-do (KR); YIM, Jihyeon, 17084 Gyeonggi-do (KR)
(74) Representative: Michalski Hüttermann & Partner mbB

(57) **Abstract**

A negative electrode active material, a negative electrode including the negative electrode active material, and a method for manufacturing the negative electrode active material are disclosed. The negative electrode active material may include a core and a carbon coating layer on the core. The core may include a porous support including a plurality of pores and a silicon on a surface of the porous support. The plurality of pores may include micro pores. A volume ratio of the micro pores of the porous support may be about 50% to about 100% relative to (e.g., based on) a total pore volume of the porous support. The porous support may include a first amorphous (e.g., non-crystalline) carbon, and the silicon may include an amorphous (e.g., non-crystalline) silicon.

## Description

### CROSS-REFERENCE TO RELATED APPLICATION

The present application claims priority to and the benefit of Korean Patent Application No. 10-2025-0045483, filed on April 08, 2025, in the Korean Intellectual Property Office, the entire disclosure of which is incorporated herein by reference.

### BACKGROUND

### 1. Field

One or more embodiments of the present disclosure relate to a negative electrode active material, a negative electrode including the negative electrode active material, and a method for manufacturing the negative electrode active material.

### 2. Description of the Related Art

Recently, with the rapid proliferation and spread of battery-powered electronic devices, such as mobile phones, notebook computers, and/or the like, and/or electric vehicles, the demand for rechargeable batteries with high energy density and large capacity (e.g., electrical capacity) has significantly increased. In response, extensive research and development efforts have been directed toward enhancing (e.g., improving) the performance of rechargeable lithium batteries.

A rechargeable lithium battery includes a positive electrode, a negative electrode, and an electrolyte. Both (e.g., simultaneously) the positive electrode and the negative electrode contain active (e.g., electrically active) materials capable of lithium-ion intercalation and deintercalation. Electrical energy is generated through oxidation and reduction reactions as lithium ions move between the electrodes during charging and discharging (during charging and discharging cycles).

### SUMMARY

One or more aspects of embodiments of the present disclosure are directed toward a negative electrode active material exhibiting high capacity (e.g., electrical capacity), high efficiency (e.g., initial efficiency), and excellent or suitable cycle-life characteristics, and a negative electrode including the negative electrode active material.

One or more aspects of embodiments of the present disclosure are directed toward a method for manufacturing the negative electrode active material.

Additional aspects of embodiments will be set forth in part in the description which follows and, in part, will be apparent from the description or may be learned by practice of the presented embodiments of the disclosure.

According to one or more embodiments of the present disclosure, a negative electrode active material may include: a core; and a carbon coating layer on the core. The core may include: a porous support including a plurality of pores; and a silicon on the plurality of pores and a surface of the porous support. The plurality of pores may include micro pores, wherein a volume ratio of the micro pores of the porous support is about 50% to about 100% relative to (e.g., based on) a total pore volume of the porous support, wherein the porous support may include a first amorphous (e.g., non-crystalline) carbon, and the silicon may include an amorphous (e.g., non-crystalline) silicon.

According to one or more embodiments of the present disclosure, a negative electrode may include: a negative electrode current collector; and a negative electrode active material layer on the negative electrode current collector. The negative electrode active material layer may include a negative electrode active material, the negative electrode active material may include a core, and a carbon coating layer on the core, and the core may include: a porous support including a plurality of pores; and a silicon on the plurality of pores and a surface of the porous support. The negative electrode active material may include meso pores, and a volume ratio of the meso pores of the negative electrode active material may be about 50% to about 100% relative to (e.g., based on) a total pore volume of the negative electrode active material.

According to one or more embodiments of the present disclosure, a method for manufacturing a negative electrode active material may include: preparing a porous support including a plurality of pores; performing a vapor deposition process utilizing a silicon precursor on the porous support to form a silicon; and forming a carbon coating layer utilizing a carbon precursor in the silicon-formed product. The plurality of pores may include micro pores, and a volume ratio of the micro pores of the porous support may be about 50% to about 100% relative to (e.g., based on) a total pore volume of the porous support.

For example, the combination of a porous carbon support structure with high micropore or mesopore volume, amorphous (e.g., non-crystalline) silicon deposition, and a conformal carbon coating layer provides a synergistic effect that enhances lithium-ion diffusion, accommodates volume expansion during cycling, and improves or enhances structural integrity. These features collectively contribute to enhanced electrochemical performance, including higher initial coulombic efficiency, enhanced cycle life, and increased specific capacity, thereby making the disclosed negative electrode active material and manufacturing method suitable for high-performance rechargeable lithium batteries.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a simplified conceptual diagram illustrating a rechargeable lithium battery according to one or more embodiments of the present disclosure.
FIGS. 2-5 are schematic diagrams each illustrating a rechargeable lithium battery according to one or more embodiments of the present disclosure.
FIG. 6 is a cross-sectional view of a negative electrode for a rechargeable lithium battery according to one or more embodiments of the present disclosure.
FIG. 7 is a diagram schematically illustrating a negative electrode active material according to one or more embodiments of the present disclosure.
FIG. 8 is a diagram to illustrate a method for manufacturing a negative electrode active material according to one or more embodiments of the present disclosure.
FIG. 9 is a scanning electron microscope (SEM) image of (preformed on) a surface of the negative electrode active material according to Example 1.
FIGS. 10A and 10B are cross-sectional SEM images of the negative electrode active material according to Example 1.
FIGS. 11A and 11B are the results of energy dispersive spectroscopy (EDS) line scan analysis of the negative electrode active material according to Example 1.
FIG. 12 is a graph of the pore distribution of the porous support and the negative electrode active material according to Example 1.

### DETAILED DESCRIPTION

To fully understand the aspects and features of the present disclosure, the subject matter of the present disclosure will be described in more detail with reference to the accompanying drawings. However, the present disclosure is not limited to the disclosed embodiments and may be implemented in one or more suitable forms. Rather, these embodiments are provided as examples, by referring to the drawings, to explain the aspects and features of the present disclosure to those skilled in the art.

In this description, if (e.g., when) an element is described as being "on" or above" another element, it may be directly on or directly above the other element, or one or more intervening elements may be present therebetween. In contrast, if (e.g., when) an element is referred to as being "directly on" or "directly above" another element, no intervening elements are present therebetween.

In the drawings, thicknesses of one or more components may be exaggerated to better illustrate technical details. Throughout the specification, like reference numerals indicate like elements throughout the attached drawings and the written description, and duplicative descriptions thereof may not be provided in the specification.

As used herein, the singular forms "a," "an," and "the" are intended to include the plural forms as well, unless the context clearly indicates otherwise.

Unless otherwise explicitly stated in this description, singular forms may also include plural forms.

Unless explicitly stated otherwise, the phrase "A or B" may indicate "A but not B," "B but not A," and "A and B."

In the context of the present application and unless otherwise defined, the terms "use," "using," and "used" may be considered synonymous with the terms "utilize," "utilizing," and "utilized," respectively.

The terms "has/includes" and "having/including" do not exclude the presence or addition of one or more other components. For example, it should be understood that the term "comprise(s)/comprising," "include(s)/including," or "have/has/having" specifies the presence of stated features, integers, steps, operations, elements, and/or components, but do not preclude the presence or addition of one or more other features, integers, steps, operations, elements, components, and/or groups thereof. Also, the terms "comprise(s)/comprising," "include(s)/including," "have/has/having," or similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, for example, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

In this description, the phrase "combination thereof" may refer to a mixture, a stack, a composite, a copolymer, an alloy, a blend, a reaction product, and/or the like of constituents.

Unless otherwise specifically defined, the term "particle diameter" refers to an average particle diameter. The particle diameter may represent the median particle size (D50), which corresponds to the diameter of particles at 50 vol% in a cumulative particle size distribution.

The average particle diameter (D50) may be measured using any suitable methods that are generally available or generally used, such as a particle size analyzer, transmission electron microscope (TEM) imaging, and/or scanning electron microscope (SEM) imaging. As used herein, if (e.g., when) a definition is not otherwise provided, the average particle diameter refers to a diameter (D₅₀) of particles having a cumulative volume of 50 volume% in the particle size distribution that is obtained by measuring the size (e.g., diameter or major axis length) of about 20 particles at random in a scanning electron microscope (SEM) image. In one or more embodiments, dynamic light scattering (DLS) may be used, where particle counts within size ranges are analyzed to calculate the average particle diameter (D50). Also, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution.

In one or more embodiments, if (e.g., when) particles, pores, or grains are spherical (e.g., substantially spherical), "diameter" or "size" refers to a particle diameter, a pore diameter, or a gain diameter, and if (e.g., when) the particles, pores, or grains are non-spherical (e.g., substantially non-spherical), the "diameter" or "size" refers to a major axis length.

It should be understood that, even if the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

The utilization of "may" when describing embodiments of the present disclosure refers to "one or more embodiments of the present disclosure."

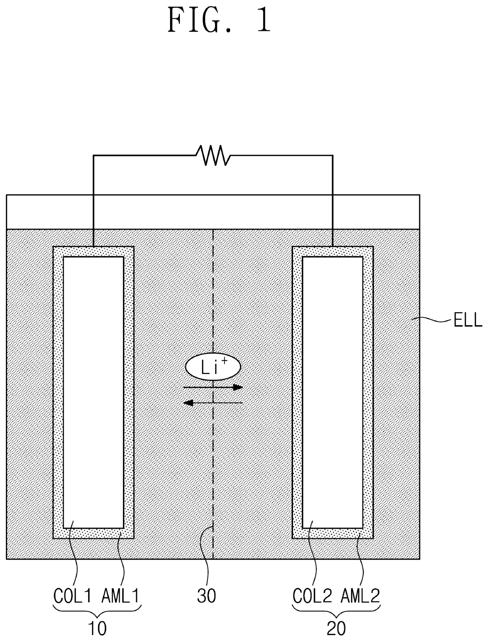

FIG. 1 is a simplified conceptual diagram illustrating a rechargeable lithium battery according to one or more embodiments of the present disclosure. Referring to FIG. 1, the rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be arranged between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium by which lithium ions are transferred between the positive electrode 10 and the negative electrode 20. In the electrolyte ELL, the lithium ions may move through the separator 30 toward one selected from the positive electrode 10 and the negative electrode 20.

### Positive Electrode 10

The positive electrode 10 for a rechargeable lithium battery may include a current collector COL1 and a positive electrode active material layer AML1 on the current collector COL1. The positive electrode active material layer AML1 may include a positive electrode active material and further include a binder and/or a conductive (e.g., electrically conductive) material (e.g., electron conductor).

For example, the positive electrode 10 may further include an additive that may act or serve as a sacrificial positive electrode.

An amount of the positive electrode active material may be ≥ 90 wt% to ≤ 99.5 wt% relative to (e.g., based on) 100 wt% of the positive electrode active material layer AML1. An amount of each of the binder and the conductive material may be ≥ 0.5 wt% to ≤ 5 wt% relative to (e.g., based on) 100 wt% of the positive electrode active material layer AML1.

The binder may act or serve to improve or enhance attachment of positive electrode active material particles to each other and also to improve or enhance attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but embodiments of the present disclosure are not limited thereto.

The conductive material may be utilized to provide an electrode with conductivity (e.g., electrical conductivity), and any suitable conductive (e.g., electrically conductive) material that does not cause a chemical change (e.g., an undesirable chemical change) in a rechargeable lithium battery may be utilized as the conductive material. The conductive material may include, for example, a carbon-based material, such as natural graphite, artificial graphite, carbon black, acetylene black, Ketjen black, carbon fiber, carbon nano-fiber, and/or carbon nano-tube; a metal powder and/or a metal fiber containing one or more selected from among copper, nickel, aluminum, and silver; a conductive (e.g., electrically conductive) polymer, such as polyphenylene and/or a polyphenylene derivative; or a mixture thereof.

Aluminum (Al) may be utilized as the current collector COL1, but embodiments of the present disclosure are not limited thereto.

### Positive Electrode Active Material

The positive electrode active material in the positive electrode active material layer AML1 may include a compound (e.g., a lithiated intercalation compound) that may reversibly intercalate and deintercalate lithium. For example, the positive electrode active material may include at least one type (kind) of composite oxide including lithium and metal that is selected from among cobalt, manganese, nickel, and a (e.g., any suitable) combination thereof.

The composite oxide may include lithium transition metal composite oxide, for example, lithium-nickel-based oxide, lithium-cobalt-based oxide, lithium-manganese-based oxide, lithium-iron-phosphate-based compounds, cobalt-free nickel-manganese-based oxide, or a (e.g., any suitable) combination thereof.

For example, the positive electrode active material may include a compound expressed by one selected from among chemical formulae. LiₐA_{1-b}X_{b}O_{2-c}D_{c} (where 0.90≤a≤1.8, 0≤b≤0.5, and 0≤c≤0.05); LiₐMn_{2-b}X_{b}O_{4-c}D_{c} (where 0.90≤a≤1.8, 0≤b≤0.5, and 0≤c≤0.05); LiₐNi_{1-b-c}Co_{b}X_{c}O_{2-α}D_{α} (where 0.90≤a≤1.8, 0≤b≤0.5, 0≤c≤0.5, and 0<α<2); LiₐNi_{1-b-c}Mn_{b}X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LiₐMn_{1-b}G_{b}O₂ (where 0.90≤a≤1.8 and 0.001≤b≤0.1); LiₐMn₂G_{b}O₄ (where 0.90≤a≤1.8 and 0.001≤b≤0.1); LiₐMn_{1-g}G_{g}PO₄ (where 0.90≤a≤1.8 and 0≤g≤0.5); Li_{(3-f)}Fe₂(PO₄)₃ (where 0≤f≤2); and LiₐFePO₄ (where 0.90≤a≤1.8).

In the foregoing chemical formulae, A may be nickel (Ni), cobalt (Co), manganese (Mn), or a (e.g., any suitable) combination thereof, X may be aluminum (Al), Ni, Co, Mn, chromium (Cr), iron (Fe), magnesium (Mg), strontium (Sr), vanadium (V), a rare-earth element, or a (e.g., any suitable) combination thereof, D may be oxygen (O), fluorine (F), sulfur (S), phosphorus (P), or a (e.g., any suitable) combination thereof, G may be Al, Cr, Mn, Fe, Mg, lanthanum (La), cerium (Ce), Sr, V, or a (e.g., any suitable) combination thereof, and L1 may be Mn, Al, or a (e.g., any suitable) combination thereof.

For example, the positive electrode active material may be a high-nickel-based positive electrode active material having a nickel amount of equal to or greater than about 80 mol%, equal to or greater than about 85 mol%, equal to or greater than about 90 mol%, equal to or greater than about 91 mol%, or equal to or greater than about 94 mol% and equal to or less than about 99 mol% relative to (e.g., based on) 100 mol% of metal devoid of lithium in the lithium transition metal composite oxide. The high-nickel-based positive electrode active material may achieve high capacity (e.g., electrical capacity) and thus may be applied to a high-capacity (e.g., electrical capacity) and high-density (e.g., energy density) rechargeable lithium battery.

### Separator 30

Based on a type (kind) of the rechargeable lithium battery, the separator 30 may be present between the positive electrode 10 and the negative electrode 20. The separator 30 may include one or more of polyethylene, polypropylene, and polyvinylidene fluoride and may have a multi-layered separator thereof, such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer on one surface or both surfaces (e.g., two opposite (opposite facing) surfaces) of the porous substrate, which coating layer includes an organic material, an inorganic material, or a (e.g., any suitable) combination thereof.

The porous substrate may be a polymer layer including one selected from among polyolefin, such as polyethylene and polypropylene, polyester, such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, a cyclic olefin copolymer, polyphenylenesulphide, polyethylene naphthalate, glass fiber, and/or polytetrafluoroethylene (e.g., Teflon^{™}), or may be a copolymer or mixture including two or more of the materials as described in one or more embodiments.

The organic material may include a polyvinylidenefluoride-based copolymer and/or a (meth)acrylic copolymer.

The inorganic material may include an inorganic particle selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a (e.g., any suitable) combination thereof, but embodiments of the present disclosure are not limited thereto.

The organic material and the inorganic material may be present mixed in one coating layer or may be present as a stack of a coating layer including the organic material and a coating layer including an inorganic material.

### Electrolyte ELL

The electrolyte ELL for a rechargeable lithium battery may include a non-aqueous (e.g., water-insoluble) organic solvent and a lithium salt.

The non-aqueous organic solvent may act or serve as a medium to transmit ions that participate in an electrochemical reaction of the rechargeable lithium battery.

The non-aqueous organic solvent may include a carbonate-based solvent, an ester-based solvent, an ether-based solvent, a ketone-based solvent, an alcohol-based solvent, an aprotic solvent, or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2.5-dimethyltetrahydrofuran, and/or tetrahydrofuran. The ketone-based solvent may include cyclohexanone. The alcohol-based solvent may include ethyl alcohol and/or isopropyl alcohol, and the aprotic solvent may include nitriles, such as R-CN (where R is a hydrocarbon group having a C2 to C20 linear, branched, or cyclic structure and may include a double bond (e.g., a carbon-carbon double bond), an aromatic ring, and/or an ether group); amides, such as dimethylformamide; dioxolanes, such as 1,3-dioxolane and/or 1.4-dioxolane; and/or sulfolanes.

The non-aqueous organic solvent may be used alone or in a mixture of two or more substances.

In one or more embodiments, if (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be a material that is dissolved in the non-aqueous organic solvent to act or serve as a supply source of lithium ions in a rechargeable lithium battery and plays a role in enabling a basic operation of a rechargeable lithium battery and in promoting the movement of lithium ions between the positive electrode and the negative electrode. The lithium salt may include, for example, at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(CyF_{2y+1}SO₂) (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

### Rechargeable Lithium Battery

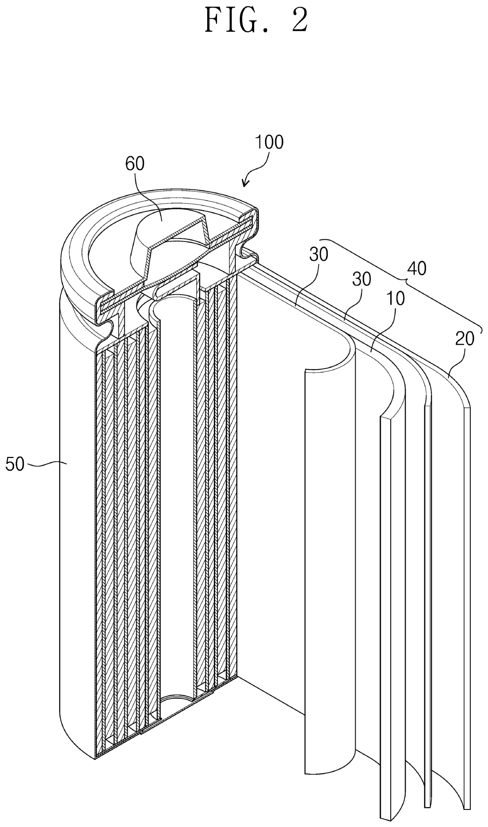

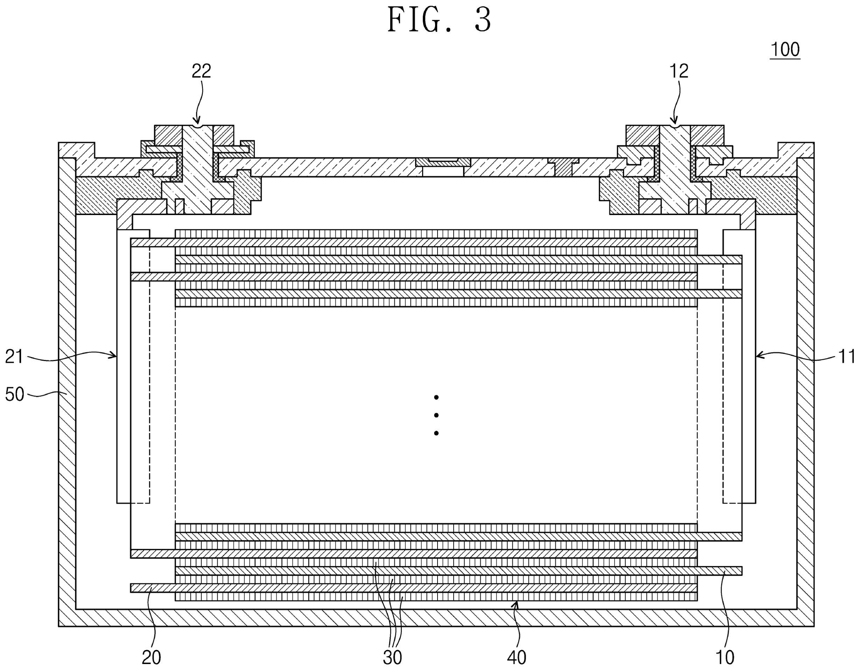

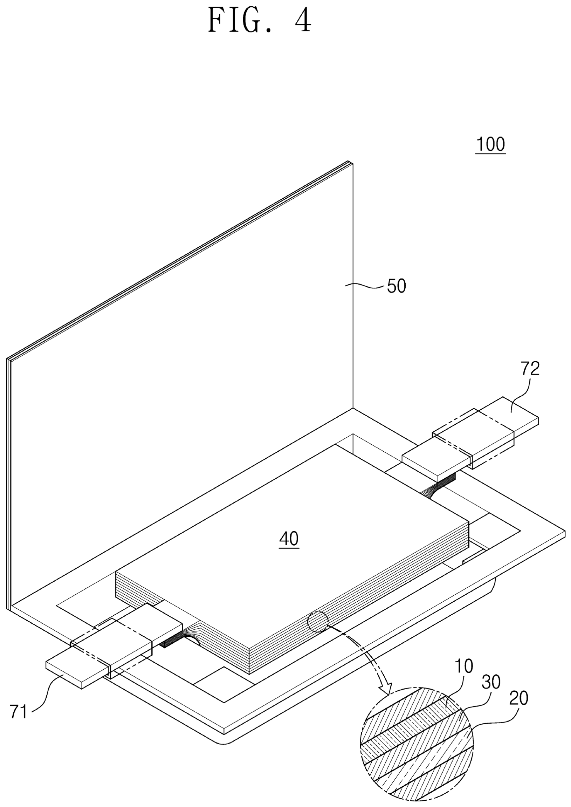

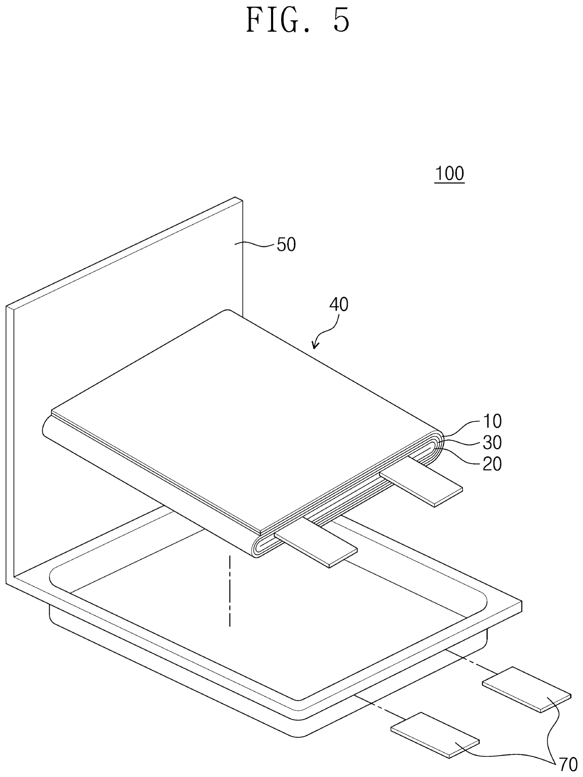

Based on a shape of a rechargeable lithium battery, the rechargeable lithium battery may be classified into cylindrical, prismatic, pouch, and coin types (kinds). FIGS. 2 to 5 illustrate simplified diagrams each illustrating a rechargeable lithium battery according to one or more embodiments, with FIG. 2 illustrating a cylindrical battery, FIG. 3 illustrating a prismatic battery, and FIGS. 4 and 5 illustrating pouch-type (kind) batteries. Referring to FIGS. 2 to 4, a rechargeable lithium battery 100 may include an electrode assembly 40 in which a separator 30 is between a positive electrode 10 and a negative electrode 20, and may also include a casing 50 in which the electrode assembly 40 is accommodated. The positive electrode 10, the negative electrode 20, and the separator 30 may be impregnated in an electrolyte. The rechargeable lithium battery 100 may include a sealing member 60 that seals the casing 50 as illustrated in FIG. 2. In one or more embodiments, as illustrated in FIG. 3, the rechargeable lithium battery 100 may include a positive electrode lead tab 11, a positive electrode terminal 12, a negative electrode lead tab 21, and a negative electrode terminal 22. As illustrated in FIGS. 4 and 5, the rechargeable lithium battery 100 may include an electrode tab 70, or a positive electrode tab 71 and a negative electrode tab 72, which electrode tab 70 acts or serves as an electrical path to externally induce a current generated in the electrode assembly 40.

The rechargeable lithium battery according to one or more embodiments of the present disclosure may be applied to automotive vehicles, mobile phones, and/or any other suitable electrical devices, but embodiments of the present disclosure are not limited thereto.

### Negative Electrode 20

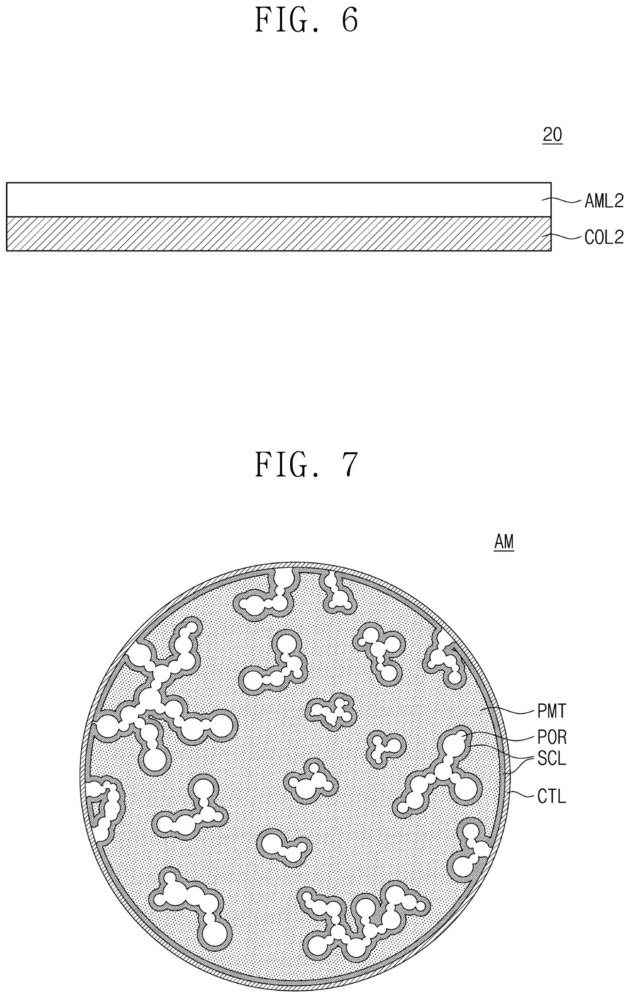

FIG. 6 is a cross-sectional view of a negative electrode for a rechargeable lithium battery according to one or more embodiments of the present disclosure. Referring to FIG. 6, the negative electrode 20 according to one or more embodiments of the present disclosure may include a negative electrode current collector COL2 and a negative electrode active material layer AML2 on the negative electrode current collector COL2. The negative electrode active material layer AML2 may include a negative electrode active material and may further include a binder and/or a conductive (e.g., electrically conductive) material.

For example, the negative electrode active material layer AML2 may include a negative electrode active material of ≥ 90 wt% to ≤ 99 wt%, a binder of ≥ 0.5 wt% to ≤ 5 wt%, and a conductive (e.g., electrically conductive) material of ≥ 0 wt% to ≤ 5 wt%.

The binder may act or serve to improve or enhance attachment of the negative electrode active material particles to each other and also to improve or enhance attachment of the negative electrode active material to the negative electrode current collector COL2. The binder may include a non-aqueous (e.g., water-insoluble) binder, an aqueous (e.g., water-soluble) binder, a dry binder, or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide imide, polyimide, or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluoro elastomer, polyethylene oxide, polyvinyl pyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenolic resin, an epoxy resin, polyvinyl alcohol, and a (e.g., any suitable) combination thereof.

If (e.g., when) an aqueous (e.g., water-soluble) binder is utilized as the negative electrode binder, a cellulose-based compound capable of providing or increasing viscosity may further be included. The cellulose-based compound may include at least one of carboxymethyl cellulose, hydroxypropyl methylcellulose, methyl cellulose, or an alkali metal salt thereof. The alkali metal may include sodium (Na), potassium (K), and/or lithium (Li).

The dry binder may include a fibrillizable polymeric material, for example, polytetrafluoroethylene, polyvinylidene fluoride, a polyvinylidene fluoride-hexafluoropropylene copolymer, polyethylene oxide, or a (e.g., any suitable) combination thereof.

The conductive material may be utilized to provide an electrode with conductivity (e.g., electrical conductivity), and any suitable electrically conductive material that does not cause a chemical change (e.g., an undesirable chemical change) in the rechargeable lithium battery may be utilized as the conductive material. For example, the conductive material may include a carbon-based material, such as natural graphite, artificial graphite, carbon black, acetylene black, Ketjen black, carbon fiber, carbon nano-fiber, and carbon nano-tube; a metal powder and/or a metal fiber including copper, nickel, aluminum, and silver; a conductive (e.g., electrically conductive) polymer, such as polyphenylene and/or a polyphenylene derivative; or a mixture thereof.

The negative electrode current collector COL2 may include a copper foil, a nickel foil, a stainless-steel foil, a titanium foil, a nickel foam, a copper foam, a polymer substrate coated with a conductive (e.g., electrically conductive) metal, or a (e.g., any suitable) combination thereof.

The negative electrode active material layer AML2 may include a negative electrode active material as described in one or more embodiments and may further include crystalline carbon. The crystalline carbon may include artificial graphite, natural graphite, or a (e.g., any suitable) combination thereof.

If (e.g., when) the negative electrode active material layer AML2 includes the negative electrode active material according to the present disclosure as a first negative electrode active material and includes crystalline carbon as a second negative electrode active material, a weight ratio of the first negative electrode active material to the second negative electrode active material may be about 1:99 to about 50:50. For example, the weight ratio of the first negative electrode active material to the second negative electrode active material may be about 5:95 to about 40:60 or about 10:90 to about 30:60. If (e.g., when) the weight ratio of the first negative electrode active material to the second negative electrode active material satisfies the foregoing ranges, it may have advantages or benefits of high capacity (e.g., electrical capacity), high output, and long lifetime.

### Negative Electrode Active Material AM

FIG. 7 is a diagram schematically illustrating a negative electrode active material according to one or more embodiments of the present disclosure.

Referring to FIG. 7, a negative electrode active material AM according to one or more embodiments of the present disclosure may include a core and a shell on the core. The core may include a porous support PMT and silicon SCL. The shell may include a carbon coating layer CTL.

The porous support PMT may include a carbon-based material as a material capable of reversibly intercalating/deintercalating lithium ions. For example, the porous support PMT may include a first amorphous (e.g., non-crystalline) carbon. The first amorphous carbon may include at least one of activated carbon, carbon nano-tube, carbon nano-wire, graphene, carbon fiber, furnace black, carbon black, acetylene black, Denka black, Ketjen black, or a (e.g., any suitable) combination thereof, but a type (kind) of the porous support PMT is not particularly limited.

For example, the porous support PMT may include activated carbon that is a hard carbon. The hard carbon may exhibit good or suitable electrical conductivity and lithium ion mobility, while undergoing minimal or reduced volume expansion during charging and discharging. Thus, if (e.g., when) the porous support PMT includes hard carbon, volume expansion of silicon (Si) may be suppressed or reduced, and low electrical conductivity and ionic conductivity may be improved.

The porous support PMT may include a plurality of pores POR in its internal portion and surface. As the porous support PMT includes a plurality of pores POR, the pores POR may act or serve as a buffer to accommodate the volume expansion of the silicon. Thus, a structure of the negative electrode active material AM may be maintained during charge and discharge, thereby improving or enhancing cycle-life characteristics and achieving excellent or suitable initial efficiency. As a result, according to one or more embodiments of the present disclosure, the volume expansion of the rechargeable lithium battery may be effectively or suitably suppressed or reduced while taking advantage of high-capacity (e.g., electrical capacity) characteristics of silicon.

The plurality of pores POR may include micro pores. The plurality of pores POR may further include meso pores and/or a macro pores. In the present disclosure, micro pores may refer to pores having a diameter of about 2 nm or less. Meso pores may refer to pores having a diameter greater than about 2 nm and less than about 50 nm. Macro pores may refer to pores having a diameter of about 50 nm or more.

A volume ratio of the micro pores in the porous support PMT may be ≥ 50% to ≤t 100% relative to (e.g., based on) a total pore volume of the porous support PMT. For example, the volume ratio of the micro pores of the porous support PMT may be ≥ 50% to ≤ 95%, ≥ 60% to ≤ 95%, or ≥ 60% to ≤ 90% relative to (e.g., based on) the total pore volume of the porous support PMT.

A volume ratio of the meso pores of the porous support PMT may be about 40% or less relative to (e.g., based on) the total pore volume of the porous support PMT. For example, the volume ratio of the meso pores of the porous support PMT may be ≥ 5% to ≤ 40%, ≥ 10% to ≤ 40%, or ≥ 10% to ≤ 30%. A volume ratio of the macro pores of the porous support PMT may be about 20% or less relative to (e.g., based on) the total pore volume of the porous support PMT. For example, the volume ratio of the macro pores of the porous support PMT may be about 15% or less, about 12% or less, or about 10% or less. The total pore volume of the porous support PMT may be defined as a sum of the pore volumes of the micro pores, meso pores, and macro pores within the porous support PMT as described in one or more embodiments.

If (e.g., when) the volume ratio of the micro pores in the porous support PMT satisfies the foregoing ranges, size of the silicon SCL within the pores POR of the porous support PMT may be appropriately or suitably controlled or selected. For example, because the diameter of the micro pores is about 2 nm or less, the size (e.g., diameter) of the silicon SCL within the micro pores may be about 2 nm or less. Therefore, if (e.g., when) the volume ratio of the micro pores is included in the foregoing ranges, among the silicon SCL within the pores POR of the porous support PMT, nano-sized silicon having a size (e.g., diameter) of about 2 nm or less, for example, whose volume expansion is suppressed or reduced, may be appropriately or suitably included in the negative electrode active material AM.

In contrast, if (e.g., when) the volume ratio of the micro pores is less than about 50%, the volume ratios of meso pores and macro pores become relatively higher. Accordingly, a region (or volume) occupied by large pores (e.g., a region in which the silicon SCL can be deposited within the porous support PMT) may become relatively larger, and thus it may be difficult to control the size of the silicon SCL. As a result, the effect of suppressing or reducing the volume expansion of silicon may be limited, resulting in degradation of the initial efficiency and cycle-life characteristics of the rechargeable lithium battery.

The average pore size of the porous support PMT may be greater than about 0 nm and less than or equal to about 10 nm. For example, the average pore size of the porous support PMT may be ≥ 1 nm to ≤ 8 nm, ≥ 2 nm to ≤ 8 nm, or ≥ 3 nm to ≤ 6 nm. The pore volume of the porous support PMT may be ≥ 0.5 cm³/g to ≤ 1 cm³/g. For example, the pore volume of the porous support PMT may be ≥ 0.6 cm³/g to ≤ 1 cm³/g, ≥ 0.7 cm³/g to ≤ 1 cm³/g, or ≥t 0.8 cm³/g to ≤ 1 cm³/g.

If (e.g., when) the average pore size and the pore volume of the porous support PMT each satisfy the foregoing ranges, the size of the silicon SCL deposited on the pores POR may be more appropriately or suitably controlled or selected. As a result, high capacity (e.g., electrical capacity) may be achieved while improving or enhancing initial efficiency and cycle-life characteristics.

For example, the pore volume of the porous support PMT may be measured by the Barrett-Joyner-Halenda (BJH) method using an N₂ adsorption-desorption isotherm. For example, a pretreatment process may be performed by heating the porous support PMT to about 523 K (Kelvin, absolute temperature) at a rate of about 10 K/min and maintaining the temperature under a pressure of about 100 mmHg or less for ≥ 2 hours to ≤ 10 hours. Thereafter, the measurement may be conducted by absorbing nitrogen at about 32 points over a relative pressure (P/P₀) range from ≥ 0.01 torr to ≤ 0.955 torr in liquid nitrogen adjusted at a relative pressure of about 0.01 torr or less, followed by desorbing nitrogen at about 24 points up to the relative pressure of about 0.14 torr. In this case, the pore size may be determined from the range in which an excessive amount of N₂ is adsorbed.

As another example, the volume ratio of each of the meso pores and the macro pores to the total pore volume of the porous support PMT may be obtained by the Barrett-Joyner-Halenda (BJH) method using a porosimetry analyzer (ASAP2020, Micromeritics). In one or more embodiments, the volume ratio of the micro pores to the total pore volume of the porous support PMT may be determined by a t-plot method using a porosimetry analyzer (ASAP2020, Micromeritics).

An average particle diameter of the porous support PMT may be ≥ 1 µm to ≤ 50 µm, ≥ 1 µm to ≤ 30 µm, or ≥ 1 µm to ≤ 20 µm. The average particle diameter may be a median diameter measured using a laser-type (kind) particle size distribution meter. If (e.g., when) the average particle diameter of the porous support PMT satisfies the foregoing ranges, the negative electrode active material AM may exhibit excellent or suitable lithium ion conductivity and electrical conductivity.

An amount of the porous support PMT may be ≥ 30 wt% to ≤ 80 wt% relative to a total weight (e.g., based on 100 wt%) of the negative electrode active material AM. For example, the amount of the porous support PMT may be ≥ 40 wt% to ≤ 70 wt%, ≥ 45 wt% to ≤ 65 wt%, or ≥ 45 wt% to ≤ 60 wt% relative to the total weight (e.g., based on 100 wt%) of the negative electrode active material AM. If (e.g., when) the amount of the porous support PMT satisfies the foregoing ranges, it may be feasible to limit the amount of the silicon SCL to be deposited, thereby obtaining an advantage or benefit of securing a desired or suitable capacity (e.g., electrical capacity).

The silicon SCL may be provided on the surface and the plurality of pores POR of the porous support PMT. Although illustrated in FIG. 7 as having a layer shape in which silicon SCL is continuously formed, embodiments of the present disclosure are not limited thereto. The silicon SCL may be in a form of islands that are discontinuously formed.

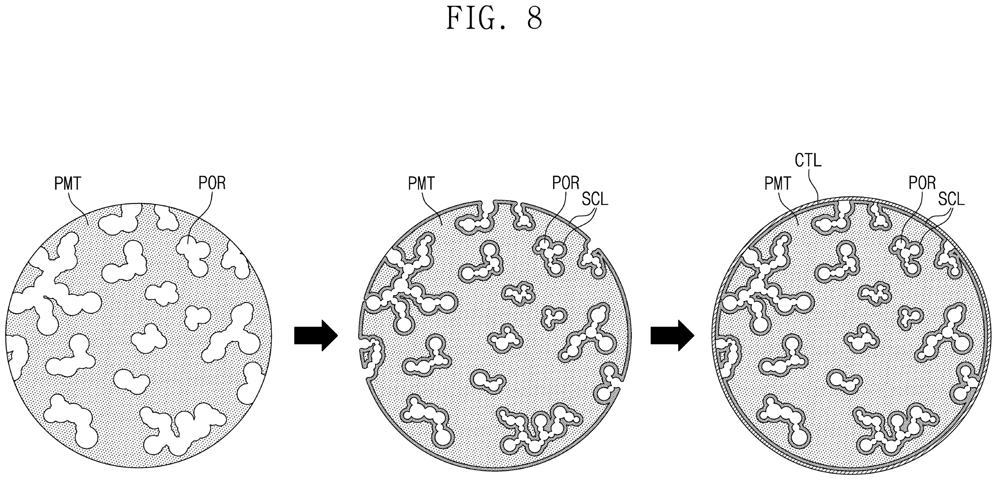

The silicon SCL may include nano-sized silicon (Si) as formed on the pores POR of the porous support PMT, as described in one or more embodiments. The silicon SCL may be formed through a vapor deposition process utilizing a silicon precursor. A method of forming the silicon SCL will be described herein in more detail with reference to FIG. 8.

The silicon SCL may include an amorphous (e.g., non-crystalline) silicon. If (e.g., when) the silicon SCL is amorphous (e.g., non-crystalline) silicon, the volume expansion during charging and discharging may be reduced compared to crystalline silicon, thereby further improving or enhancing the cycle life characteristics of the rechargeable lithium battery. The amorphous silicon may be identified by transmission electron microscopy (TEM) analysis and/or X-ray diffraction (XRD) analysis. For example, in TEM analysis, silicon in which no crystal lattice stripes are observed may be referred to as amorphous (e.g., non-crystalline) silicon. As another example, if (e.g., when) a broad peak appears in XRD analysis using a CuKα radiation source, silicon may be referred to as amorphous (e.g., non-crystalline) silicon.

The silicon SCL may have a crystal grain size of about 4 nm or less as measured by X-ray diffraction analysis. For example, the crystal grain size of silicon SCL may be about 3.5 nm or less, about 3 nm or less, about 2 nm or less, or about 1 nm or less. If (e.g., when) the crystal grain size of silicon SCL exceeds about 4 nm, volume expansion during charging and discharging may be increased, and cycle-life characteristics may be deteriorated. For example, if (e.g., when) the crystal grain size of silicon SCL satisfies the foregoing ranges, it may exhibit an effect of suppressing or reducing irreversible reactions due to its low crystallinity, thereby improving or enhancing efficiency (e.g., initial efficiency) and cycle-life characteristics.

In this present disclosure, an expression that the silicon SCL has a crystal grain size of about 4 nm or less may refers to that the silicon SCL may exhibit properties close to a completely (e.g., substantially completely) amorphous (e.g., non-crystalline) state, while locally having nano-crystallinity. In this case, the silicon SCL may be present in a mixed state of amorphous (e.g., non-crystalline) silicon and crystalline silicon. For example, the silicon SCL may be primarily (e.g., mainly or predominantly) composed of amorphous (e.g., non-crystalline) silicon, and may partially include crystalline silicon. However, in this present disclosure, for convenience of description, silicon may be referred to as amorphous (e.g., non-crystalline) silicon even if (e.g., when) it includes one or more nano-sized crystal grains.

In one or more embodiments, if (e.g., when) the crystal grain size of the silicon SCL is about 0 nm in the X-ray diffraction (XRD) analysis, there is no regular crystal structure capable of defining the crystal grain size, which may refer to that the silicon SCL has a completely (e.g., substantially completely) non-crystalline state.

The crystal grain size of the silicon SCL may be measured by X-ray diffraction (XRD) analysis. For example, the grain size of the silicon SCL may be calculated from Scherrer's equation based on the full width at half maximum (FWHW) of the Si (111) peak, in an X-ray diffraction spectrum using a CuKα radiation with an X-ray wavelength of 1.541 Å.

The crystal grain size of the silicon SCL may be measured through the following Equation 1. $L = 0.9 λ / βcosθ$ Equation 1

In Equation 1, L is the crystal grain size (nm), λ is the X-ray wavelength (nm), β is the half width (rad) of the peak of the (111) plane of silicon, and θ is the diffraction angle (rad).

The silicon SCL may be formed on the pores POR and the surface of the porous support PMT. The nano-sized silicon SCL may be deposited in the pores POR of the porous support PMT through a vapor deposition process as described in one or more embodiments. Thus, the silicon may be uniformly (e.g., substantially uniformly) distributed from a center of the porous support PMT toward the surface of the porous support PMT. In one or more embodiments, silicon may be naturally oxidized and thus may be present in trace amounts in a form of silicon oxide within the negative electrode active material AM. For example, the core may further include silicon oxide (e.g., SiOₓ, wherein 0 < x ≤ 2; e.g., SiO₂) on the pores POR and the surface of the porous support PMT.

An amount of silicon SCL may be ≥ 10 wt% to ≤ 70 wt% relative to the total weight (e.g., based on 100 wt%) of the negative electrode active material AM. For example, the amount of silicon SCL may be ≥ 20 wt% to ≤ 60 wt%, ≥ 25 wt% to ≤ 55 wt%, or ≥ 40 wt% to ≤ 55 wt% relative to the total weight (e.g., based on 100 wt%) of the negative electrode active material AM.

If (e.g., when) the silicon SCL is formed in a layer shape, a thickness of the silicon SCL may be greater than about 0 nm and less than or equal to about 10 nm. For example, the thickness of silicon SCL may be about 0.5 nm or more, about 1 nm or more, or about 2 nm or more. The thickness of the silicon SCL may be about 8 nm or less, about 6 nm or less, or about 4 nm or less. For example, the thickness of silicon SCL may be an average thickness. As another example, if (e.g., when) silicon is formed non-uniformly, the thickness of silicon SCL may be a length of the thickest location. The thickness of the silicon SCL may be measured by SEM images and/or TEM images of a cross section of the negative electrode active material AM. The method for measuring the thickness of silicon SCL is not particularly limited, and may be any suitable method generally used in the art.

If (e.g., when) at least one or more of the plurality of pores POR are completely (e.g., substantially completely) filled with silicon SCL, a diameter of the silicon SCL may be greater than about 0 nm and less than or equal to about 10 nm. For example, the diameter of silicon SCL may be about 0.5 nm or more, about 1 nm or more, or about 2 nm or more. The diameter of the silicon SCL may be about 8 nm or less, about 6 nm or less, or about 4 nm or less.

If (e.g., when) the amount, thickness, and/or diameter of silicon SCL each satisfy the foregoing ranges, a rechargeable lithium battery having a high capacity (e.g., electrical capacity) and improved or enhanced initial efficiency and cycle-life characteristics may be provided.

Silicon undergoes volume expansion during charge and discharge, which may be a major cause of negative electrode degradation. According to one or more embodiments of the present disclosure, because the silicon SCL is provided within the pores POR of the porous support PMT, the size of the silicon SCL may be appropriately or suitably adjusted. For example, the negative electrode active material AM according to one or more embodiments of the present disclosure may include nano-sized silicon within the pores POR of the porous support PMT, thereby effectively or suitably suppressing or reducing volume expansion of silicon while achieving its high capacity (e.g., electrical capacity) characteristics. As a result, a rechargeable lithium battery including a negative electrode active material AM according to one or more embodiments of the present disclosure may exhibit excellent or suitable capacity (e.g., electrical capacity), efficiency (e.g., initial efficiency), and cycle-life characteristics.

The negative electrode active material AM according to one or more embodiments of the present disclosure may include a carbon coating layer CTL (e.g., shell) on the core as described in one or more embodiments.

The carbon coating layer CTL may be around (e.g., surround) a surface of the core. The carbon coating layer CTL may substantially completely be around (e.g., surround) the surface of the core or may be around (e.g., surround) the surface only partially.

The carbon coating layer CTL may include a second amorphous (e.g., non-crystalline) carbon. The second amorphous carbon may include at least one of soft carbon, hard carbon, mesophase pitch carbide, calcined coke, or a (e.g., any suitable) combination thereof.

An amount of the carbon coating layer CTL may be ≥ 0.1 wt% to ≤ 10 wt% relative to the total weight (e.g., based on 100 wt%) of the negative electrode active material AM. For example, the amount of the carbon coating layer CTL may be ≥ 0.1 wt% to ≤ 8 wt%, ≥ 1 wt% to ≤ 7 wt%, or ≥ 2 wt% to ≤ 6 wt% relative to the total weight (e.g., based on 100 wt%) of the negative electrode active material AM.

A thickness of the carbon coating layer CTL may be ≥ 1 nm to ≤ 100 nm. For example, the thickness of the carbon coating layer CTL may be ≥ 1 nm to ≤ 50 nm, ≥ 1 nm to ≤ 30 nm, or ≥ 1 nm to ≤ 20 nm. If (e.g., when) the thickness of the carbon coating layer CTL exceeds about 100 nm, the carbon coating layer CTL may act or serve as a resistive layer, thereby causing a decrease in capacity (e.g., electrical capacity) and efficiency during charging and discharging. In this present disclosure, the thickness of the carbon coating layer CTL may be measured by SEM images and/or TEM images of the cross-section of the negative electrode active material AM. The method for measuring the thickness of the carbon coating layer CTL is not particularly limited, and may be any suitable method generally used in the art. For example, if (e.g., when) amorphous (e.g., non-crystalline) carbon is formed non-uniformly, the thickness of the carbon coating layer CTL may be a length of the thickest location. As another example, the thickness of the carbon coating layer CTL may be an average thickness.

If (e.g., when) the amount and the thickness of the carbon coating layer CTL each satisfy the foregoing ranges, the structure may be maintained with excellent or suitable hardness while minimizing or reducing the irreversible reaction, and the initial efficiency and life characteristics of the rechargeable lithium battery may be further improved or enhanced.

According to one or more embodiments of the present disclosure, because the negative electrode active material AM includes the carbon coating layer CTL, it may be feasible to prevent the formation of cracks (or reduce a degree or occurrence of the formation of cracks) within the particles during charging and discharging, thereby maintaining the particle morphology. In one or more embodiments, the presence of the carbon coating layer CTL may prevent the silicon SCL on the plurality of pores POR and the surface of the porous support PMT from being exposed to the outside (or reduce a degree to or occurrence of which the silicon SCL on the plurality of pores POR and the surface of the porous support PMT is exposed to the outside), thereby suppressing or reducing side reactions with the electrolyte. As a result, irreversible reactions may be minimized or reduced, and the initial efficiency and cycle-life characteristics may be further improved or enhanced.

As described in one or more embodiments, the negative electrode active material AM according to one or more embodiments of the present disclosure may have a structure in which the silicon SCL is on the surface and the plurality of pores POR of the porous support PMT, and a carbon coating layer CTL is on the porous support PMT with the silicon SCL deposited thereon.

The negative electrode active material AM may have a porous structure. For example, even if (e.g., when) the silicon SCL is on the porous support PMT, one or more empty space may remain within the plurality of pores POR.

In one or more embodiments, at least one or more of the plurality of pores POR of the porous support PMT may be completely (e.g., substantially completely) filled with the silicon SCL. For example, among the plurality of pores POR in the negative electrode active material AM, one or more may retain void space, while the others may be substantially completely filled.

For example, because the silicon SCL is uniformly (e.g., substantially uniformly) deposited on the porous support PMT by a vapor deposition process as described in one or more embodiments, an internal space of relatively small micro pores may be substantially completely filled with the silicon SCL. An internal space of relatively large meso pores or macro pores may be partially filled with the silicon SCL. For example, one or more void space may remain in internal space of the meso pores or macro pores.

According to one or more embodiments of the present disclosure, a pore size distribution of the porous support PMT before the formation of the silicon SCL and the carbon coating layer CTL may differ from a pore size distribution of the negative electrode active material AM after the formation of the silicon SCL and the carbon coat layer CTL.

A volume ratio of the meso pores of the negative electrode active material AM may be ≥ 50% to ≤ 100% relative to (e.g., based on) a total pore volume of the negative electrode active material AM. For example, the volume ratio of the meso pores in the negative electrode active material AM may be ≥ 50% to ≤ 95%, ≥ 50% to ≤ 90%, or ≥ 50% to ≤ 80% relative to (e.g., based on) the total pore volume of the negative electrode active material AM.

A volume ratio of the micro pores of the negative electrode active material AM may be about 20% or less relative to (e.g., based on) the total pore volume of the negative electrode activity material AM. For example, the volume ratio of the micro pores of the negative electrode active material AM may be about 15% or less, about 12% or less, or about 10% or less. The volume ratio of the macro pores of the negative electrode active material AM may be about 50% or less relative to (e.g., based on) the total pore volume of the negative electrode activity material AM. For example, the volume ratio of the macro pores of the negative electrode active material AM may be about 10% to about 50%, about 10% to about 40%, or about 20% to about 40%. The total pore volume of the negative electrode active material AM may be defined as a sum of the pore volumes of the micro pores, meso pores, and macro pores within the negative electrode active material AM as described in one or more embodiments.

The pore volume of the negative electrode active material AM may be greater than about 0 cm³/g and less than or equal to about 0.1 cm³/g. For example, the pore volume of the negative electrode active material AM may be ≥ 0.001 cm³/g to ≤ 0.05 cm³/g, ≥ 0.005 cm³/g to ≤ 0.03 cm³/g, or ≥ 0.005 cm³/g to ≤ 0.1 cm³/g.

An average particle diameter of the negative electrode active material AM (in a form of particles) may be ≥ 1 µm to ≤ 50 µm, ≥ 1 µm to ≤ 30 µm, or ≥ 1 µm to ≤ 20 µm. The average particle diameter may be a median diameter measured using a laser-type (kind) particle size distribution meter.

As the negative electrode active material AM includes the plurality of pores POR, it may be feasible to more effectively or suitably suppress or reduce silicon volume expansion during charging and discharging. This may be because the pores POR absorb the expanded volume, and thus the expansion of the volume of the entire negative electrode active material AM may be suppressed or reduced. As a result, the rechargeable lithium battery including the negative electrode active material AM according to one or more embodiments of the present disclosure may have excellent or suitable cycle-life characteristics.

Hereinafter, a method for manufacturing a negative electrode active material according to one or more embodiments of the present disclosure will be described in more detail.

Referring to FIG. 8, a method for manufacturing a negative electrode active material according to one or more embodiments of the present disclosure may include preparing a porous support PMT including a plurality of pores; performing a vapor deposition process utilizing a silicon precursor on the porous support PMT to form a silicon SCL; and forming a carbon coating layer CTL on the porous support having the silicon formed thereon, utilizing a carbon precursor. Thus, the negative electrode active material according to one or more embodiments of the present disclosure may be manufactured by the manufacturing method as described in one or more embodiments.

First, a porous support PMT including a plurality of pores POR may be prepared. The porous support PMT may include amorphous (e.g., non-crystalline) carbon. The porous support PMT may include activated carbon, carbon nano-tube, carbon nano-wire, graphene, carbon fiber, furnace black, carbon black, acetylene black, Denka black, Ketjen black, or a (e.g., any suitable) combination thereof, but the type (kind) of the porous support PMT is not particularly limited. For example, the porous support PMT may include activated carbon that is generally available or generally used. In this case, the porous support PMT may be appropriately or suitably selected and utilized so that (e.g., such that) the respective pore volume ratios satisfy the foregoing ranges.

The porous support PMT may include the plurality of pores POR. The porous support PMT may include pores POR having diameters of one or more suitable sizes, such as micro pores, meso pores, or macro pores. A volume ratio of micro pores may be ≥ 50% to ≤ 100% relative to (e.g., based on) the total pore volume. For example, the volume ratio of micro pores may be ≥ 50% to ≤ 90%, ≥ 50% to ≤ 80%, or ≥ 50% to ≤ 70%. The diameter of the micro pores may be greater than about 0 nm and less than or equal to about 2 nm.

Subsequently, a vapor deposition process may be performed on the porous support PMT to form a silicon SCL. For example, the silicon SCL may be formed on the pores POR and the surface of the porous support PMT through a vapor deposition process utilizing a silicon precursor.

The vapor deposition process may be chemical vapor deposition (CVD) process and/or atomic layer deposition (ALD). The chemical vapor deposition may include at least one of thermal chemical vapor deposition, plasma-enhanced chemical vapor deposition, or low pressure chemical vapor deposition.

The silicon precursor may include at least one of SiH₄, Si₂H₆, Si₃H₈, SiCl₄, or a (e.g., any suitable) combination thereof. For example, the silicon precursor may include SiH₄.

Through the vapor deposition process, the silicon SCL may be deposited on the pores POR and the surface of the porous support PMT. The silicon SCL may have a crystal grain size of about 4 nm or less as measured by X-ray diffraction analysis. For example, the crystal grain size of the silicon SCL may be about 3.5 nm or less, about 3 nm or less, about 2 nm or less, or about 1 nm or less.

The grain size of the silicon SCL may be controlled or selected by adjusting the pore structure of the porous support PMT. This may be because the pore structure (e.g., pore distribution by size) affects grain growth. If (e.g., when) the volume ratio of the micro pores of the porous support PMT is less than about 50%, because relatively large pores with a small surface area may occupy most of the total pore volume, a density of crystal nucleus formation may be decreased. In this case, sufficient or suitable space may be available for the crystal growth, and thus large crystal grains may be formed.

In contrast, if (e.g., when) the volume ratio of the micro pores of the porous support PMT satisfies the foregoing ranges, because relatively small pores with a large surface area may occupy most of the total pore volume, a density of crystal nucleus formation may be increased. In this case, the space available for the crystal growth may be limited, and thus the formation of the crystal grains may be suppressed or reduced or small crystal grains may be formed.

In one or more embodiments, the crystal grain size of the silicon SCL may be controlled or selected by adjusting process conditions, such as heat treatment temperature and/or time in the vapor deposition process.

The vapor deposition process may be performed at a temperature at which the deposited silicon SCL may become amorphous (e.g., non-crystalline) silicon (a-Si). For example, the vapor deposition process may be performed at a temperature of ≥ 400 °C to ≤ 700 °C. If (e.g., when) the vapor deposition process is performed at a temperature higher than about 700 °C, the deposited silicon SCL may become crystalline, thereby increasing volume expansion during charge and discharge and degrading cycle-life characteristics. In contrast, if (e.g., when) the vapor deposition process is performed at a temperature lower than about 400 °C, decomposition of the silicon precursor may not occur sufficiently or suitably, and the undecomposed silicon precursor, which may act or serve as an impurity, may remain within the porous support PMT. If (e.g., when) the vapor deposition process is performed within the foregoing temperature range, it may be feasible to control the crystal grain size of silicon SCL within the foregoing range. As a result, the effect of suppressing or reducing irreversible reactions may be achieved, thereby providing a rechargeable lithium battery with improved or enhanced efficiency and cycle-life characteristics.

In the vapor deposition process, a flow rate of the silicon precursor gas may be ≥ 0.1 L/min to ≤ 1 L/min or ≥ 0.1 L/ min to ≤ 0.5 L/min. A deposition time may be ≥ 0.5 hours to ≤ 5 hours or ≥ 0.5 hours to ≤ 3 hours. In the vapor deposition process, the silicon SCL having a desired or suitable amount and crystal grain size may be formed on the porous support PMT by appropriately or suitably adjusting the gas flow rate and the deposition time.

Then, the carbon coating layer CTL may be formed utilizing a carbon precursor on the product having the silicon formed thereon. The carbon coating layer CTL forming process may be performed by a vapor deposition process utilizing a carbon precursor or may be performed by mixing and carbonizing the obtained product with an amorphous (e.g., non-crystalline) carbon precursor.

For example, the carbon coating layer CTL may be formed by a chemical vapor deposition process. The chemical vapor deposition may include at least one of thermal chemical vapor deposition, plasma-enhanced chemical vapor deposition, or low pressure chemical vapor deposition.

The vapor deposition process may be performed at a temperature of ≥ 700 °C to ≤ 1000 °C or ≥ 700 °C to ≤ 950 °C.

In the vapor deposition process, a carbon gas may be utilized as the carbon precursor. The carbon gas may include at least one of methane (CH₄), ethylene (C₂H₄), acetylene (C₂H₂), propane (C₃H₈), propylene (C₃H₆), or a (e.g., any suitable) combination thereof.

In one or more embodiments, the carbon coating layer CTL may be formed by a process of mixing and carbonizing a carbon precursor. The carbon precursor may be converted to amorphous (e.g., non-crystalline) carbon by a carbonization process to form a carbon coating layer CTL.

The weight ratio of the product obtained from the silicon SCL forming process as described in one or more embodiments and the carbon precursor as described in one or more embodiments may be about 99:1 to about 90:10. The carbon precursor may be provided in an appropriate or suitable amount so that (e.g., such that) the amount of the carbon coating layer CTL in the finally manufactured negative electrode active material satisfies a desired or suitable range.

In the carbonization process, the carbon precursor may include at least one of a petroleum pitch, a coal pitch, a meso pitch, a pitch carbon, a synthetic pitch, or a (e.g., any suitable) combination thereof.

The carbonization process may be performed at a temperature of ≥ 600 °C to ≤ 1,000 °C or ≥ 700 °C to ≤ 1000 °C. The dispersant may be removed in the carbonization process. The carbonization process may be performed in an atmosphere of nitrogen, helium, or a (e.g., any suitable) combination thereof.

Hereinafter, Examples and Comparative Examples of the present disclosure will be described in more detail. However, the following examples are merely examples of the present disclosure, and embodiments of the present disclosure are not limited to the following examples.

### Example 1

### Preparation of Negative Electrode Active Material

An activated carbon porous support was prepared, in which a total pore volume was 0.8 cm³/g, and volume ratios of micro pores, meso pores, and macro pores to the total pore volume were 60%, 30%, and 10%, respectively.

Amorphous (e.g., non-crystalline) silicon was formed on the pores and surface of the porous support by performing a chemical vapor deposition (CVD) process utilizing SiH₄ gas at 550 °C. In the CVD process, the gas flow rate of SiH₄ gas was 0.3 L/min, and the deposition was performed for 1 hour.

A carbon coating layer was formed on the surface of a porous support including the silicon by performing a chemical vapor deposition CVD process utilizing a C₂H₂ gas at 950 °C. In the CVD process, the gas flow rate of C₂H₂ gas was 0.3 L/min, and the deposition was performed for 1 hour.

The prepared negative electrode active material included a core including a silicon on the pores and surface of the porous support (e.g., an amorphous (e.g., non-crystalline) silicon on the pores and on a surface of the porous support), and a carbon coating layer on the core. At this time, an amount of the porous support was 49 wt%, an amount of the silicon was 48 wt%, and an amount of the carbon coating layer was 3wt% relative to the total weight (e.g., based on 100 wt%) of the negative electrode active material. The crystal grain size of the silicon included in the negative electrode active material was about 0 nm (e.g., the silicon included in the negative electrode active material was amorphous (e.g., non-crystalline), exhibiting no detectable crystal grain size). This may be measured by X-ray diffraction analysis using CuKα rays. The diameter of the silicon in the negative electrode active material was 2 nm (e.g., the average particle diameter of the silicon was approximately 2 nm and this refers to the size of individual silicon particles (or domains) that were deposited onto the porous carbon support during the CVD process). The pore size distribution and the pore volume of the negative electrode active material are shown in Table 1.

For example, the structural and compositional characteristics of the negative electrode active material prepared in Example 1 - for example, the high micropore volume of the porous carbon support, the deposition of ultrafine amorphous (e.g., non-crystalline) silicon particles with an average diameter of approximately 2 nm, and the conformal carbon coating layer - collectively should contribute to enhanced electrochemical performance as noted in more detail herein. The amorphous nature of the silicon, confirmed by the absence of detectable crystal grain size via XRD analysis, should allow for improved or enhanced structural stability during lithiation and delithiation.

### Manufacture of Half-cell

The prepared negative electrode active material as described and natural graphite were mixed at a weight ratio of 15 : 85. A negative electrode active material layer slurry was prepared by mixing 97.5 wt% of the mixed negative electrode active material, 1.0 wt% of carboxymethyl cellulose, and 1.5 wt% of styrene butadiene rubber in a water solvent.

The negative electrode active material layer slurry was applied to a Cu foil current collector, dried, and rolled to manufacture a negative electrode.

A half-cell was prepared by a method using the negative electrode, the lithium metal counter electrode, and an electrolyte. As the electrolyte, a mixed solvent of ethylene carbonate and dimethyl carbonate in which 1M LiPF₆ was dissolved (3:7 by volume) was used.

### Manufacture of Rechargeable Lithium Battery

A positive electrode active material layer slurry was prepared by mixing 96 wt% of LiNi_{0.8}Co_{0.1}Mn_{0.1}O₂ positive electrode active material, 2 wt% of Ketjen black, and 2 wt% of polyvinylidene fluoride in an N-methyl pyrrolidone solvent.

The positive electrode active material layer slurry was applied to an Al foil current collector, dried, and rolled to manufacture a positive electrode.

A rechargeable lithium battery (full cell) was manufactured by a method using the negative electrode, the positive electrode, and an electrolyte. As the electrolyte, a mixed solvent of ethylene carbonate and dimethyl carbonate in which 1M LiPF₆ was dissolved (3:7 by volume) was used.

### Example 2

A negative electrode active material was prepared in substantially the same manner as in Example 1, except that an activated carbon porous support having a total pore volume of 0.85 cm³/g, and volume ratios of the micro pores, meso pores, and macro pores to the total pore volume of 70%, 25%, and 5%, respectively, was used.

In the prepared negative electrode active material, an amount of the porous support was 48 wt%, an amount of the silicon was 49 wt%, and an amount of the carbon coating layer was 3 wt%. The crystal grain size of the silicon included in the negative electrode active material was about 0 nm. The pore size distribution and the pore volume of the negative electrode active material are shown in Table 1.

A half-cell and a rechargeable lithium battery were manufactured in substantially the same manner as in Example 1, except that the negative electrode active material was used.

### Example 3

A negative electrode active material was prepared in substantially the same manner as in Example 1, except that an activated carbon porous support having a total pore volume of 0.9 cm³/g, and volume ratios of the micro pores, meso pores, and macro pores to the total pore volume were 80%, 17%, and 3%, respectively, was used.

In the prepared negative electrode active material, an amount of the porous support was 47 wt%, an amount of the silicon was 50 wt%, and an amount of the carbon coating layer was 3 wt%. The crystal grain size of the silicon included in the negative electrode active material was about 0.1 nm. The pore size distribution and the pore volume of the negative electrode active material are shown in Table 1.

A half-cell and a rechargeable lithium battery were manufactured in substantially the same manner as in Example 1, except that the negative electrode active material was used.

### Example 4

A negative electrode active material was prepared in substantially the same manner as in Example 1, except that an activated carbon porous support having a total pore volume of 0.95 cm³/g, and volume ratios of micro pores and meso pores to the total pore volume of 90% and 10%, respectively, was used.

In the prepared negative electrode active material, an amount of the porous support was 46 wt%, an amount of the silicon was 51 wt%, and an amount of the carbon coating layer was 3 wt%. The crystal grain size of the silicon included in the negative electrode active material was about 0.1 nm. The pore size distribution and the pore volume of the negative electrode active material are shown in Table 1.

A half-cell and a rechargeable lithium battery were manufactured in substantially the same manner as in Example 1, except that the negative electrode active material was used.

### Comparative Example 1

A negative electrode active material was prepared in substantially the same manner as in Example 1, except that an activated carbon porous support having a total pore volume of 1.5 cm³/g, and volume ratios of the micro pores, meso pores, and macro pores to the total pore volume were 10%, 80%, and 10%, respectively, was used.

In the prepared negative electrode active material, an amount of the porous support was 40 wt%, an amount of the silicon was 57 wt%, and an amount of the carbon coating layer was 3 wt%. The crystal grain size of the silicon included in the negative electrode active material was 9 nm. The pore size distribution and the pore volume of the negative electrode active material are shown in Table 1.

A half-cell and a rechargeable lithium battery were manufactured in substantially the same manner as in Example 1, except that the negative electrode active material was used.

### Comparative Example 2

A negative electrode active material was prepared in substantially the same manner as in Example 1, except that an activated carbon porous support having a total pore volume of 1.15 cm³/g, and volume ratios of the micro pores, meso pores, and macro pores to the total pore volume were 20%, 71%, and 9%, respectively, was used.

In the prepared negative electrode active material, an amount of the porous support was 42 wt%, an amount of the silicon was 55 wt%, and an amount of the carbon coating layer was 3 wt%. The crystal grain size of the silicon included in the negative electrode active material was 6 nm. The pore size distribution and the pore volume of the negative electrode active material are shown in Table 1.

A half-cell and a rechargeable lithium battery were manufactured in substantially the same manner as in Example 1, except that the negative electrode active material was used.

### Comparative Example 3

A negative electrode active material was prepared in substantially the same manner as in Example 1, except that an activated carbon porous support having a total pore volume of 1.12 cm³/g, and volume ratios of the micro pores, meso pores, and macro pores to the total pore volume of 30%, 65%, and 5%, respectively, and an activated carbon porous support having a pore volume of was used.

In the prepared negative electrode active material, an amount of the porous support was 43 wt%, an amount of the silicon was 54 wt%, and an amount of the carbon coating layer was 3 wt%. The crystal grain size of the silicon included in the negative electrode active material was 5 nm. The pore size distribution and the pore volume of the negative electrode active material are shown in Table 1.

A half-cell and a rechargeable lithium battery were manufactured in substantially the same manner as in Example 1, except that the negative electrode active material was used.

### Comparative Example 4

A negative electrode active material was prepared in substantially the same manner as in Example 1, except that an activated carbon porous support having a pore volume of 1.10 cm³/g and volume ratios of the micro pores, meso pores, and macro pores to the total pore volume was 40%, 55%, and 5%, respectively, was used.

In the prepared negative electrode active material, an amount of the porous support was 44 wt%, an amount of the silicon was 53 wt%, and an amount of the carbon coating layer was 3 wt%. The crystal grain size of the silicon included in the negative electrode active material was 5 nm. The pore size distribution and the pore volume of the negative electrode active material are shown in Table 1.

A half-cell and a rechargeable lithium battery were manufactured in substantially the same manner as in Example 1, except that the negative electrode active material was used.

### Evaluation Example 1: SEM Image Analysis of Negative Electrode Active Material

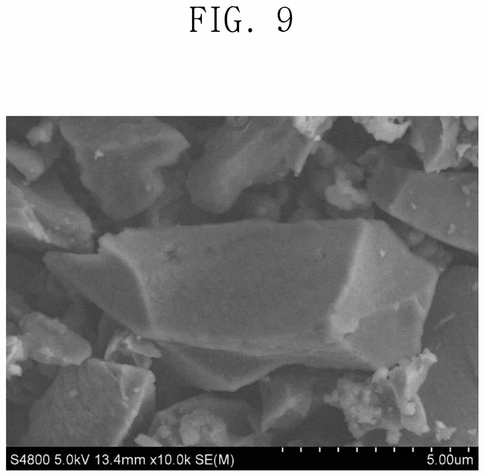

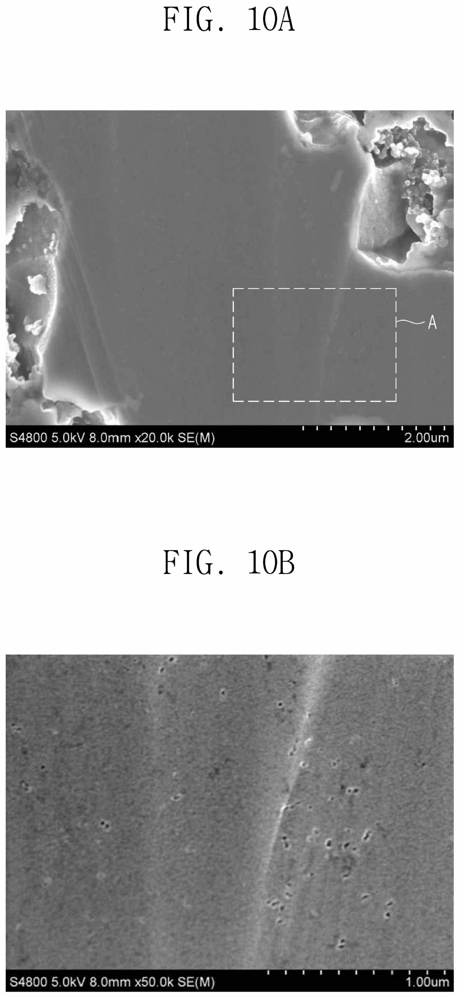

The surface and cross-sectional SEM images of the negative electrode active material according to Example 1 are shown in FIGS. 9, 10A, and 10B.

FIG. 10A is a cross-sectional SEM image of the negative electrode active material according to Example 1. FIG. 10B is an enlarged SEM image of a region A of the negative electrode active material in FIG. 10A.

Referring to FIGS. 9, 10A, and 10B, it can be confirmed that the negative electrode active material according to Example 1 has a core-shell structure. It can be seen that the core includes a porous support (dark gray portion) and a silicon (light gray portion) on the pores and surface of the porous support, and the shell includes a carbon coating layer (light gray portion) on the core.

### Evaluation Example 2: EDS Mapping Image Analysis of Negative Electrode Active Material

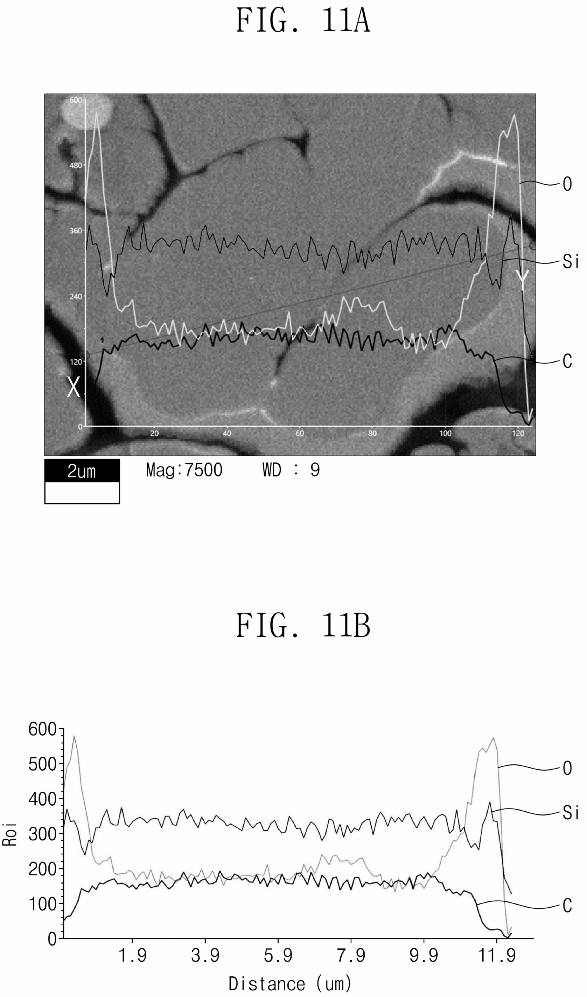

The negative electrode prepared according to Example 1 was cut in a cross-section with a focused ion beam (FIB), and a portion of the cross-section was enlarged for energy dispersive X-ray spectroscopy (EDS) line scan analysis of the negative electrode active material. The distributions of carbon (C), silicon (Si), and oxygen (O) along the X-Y line of the cross-section of the negative electrode active material were analyzed by EDS line scanning, and the results are shown in FIGS. 11A and 11B.

As shown in FIGS. 11A and 11B, it can be seen that the negative electrode active material of Example 1 has silicon (Si) present in the pores and surface of the porous support. For example, it can be confirmed that silicon (Si) is uniformly (e.g., substantially uniformly) distributed from a center of the porous support toward the surface of the porous support PMT.

### Evaluation Example 3: Porosity Evaluation of Porous Support and Negative Electrode Active Material

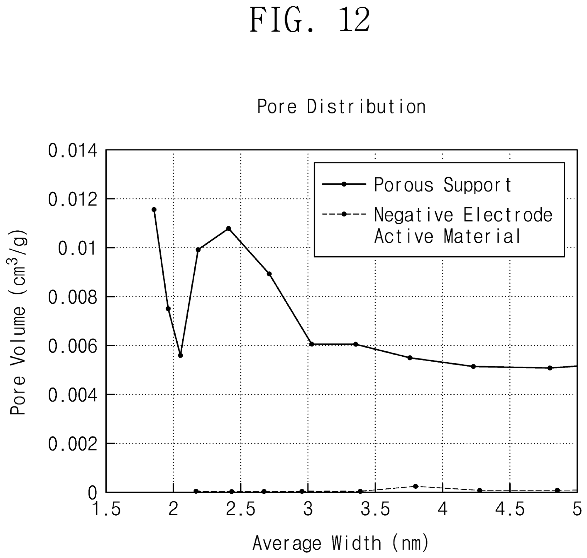

For the porous supports of Examples 1 to 4 and Comparative Examples 1 to 4, pore size distribution (pore volume ratio) and pore volume were measured using a porosimetry analyzer (ASAP2020, Micromeritics) based on Barrett-Joyner-Halenda (BJH) method and t-plot method, and the results are shown in Table 1. The pore distribution of the porous support of Example 1 is shown in FIG. 12.

For the negative electrode active materials according to Examples 1 to 4 and Comparative Examples 1 to 4, pore size distribution (pore volume ratio) and pore volume were measured using a porosimetry analyzer (ASAP2020, Micromeritics) based on Barrett-Joyner-Halenda (BJH) method and t-plot method, and the results are shown in Table 1. The pore distribution of the negative electrode active material according to Example 1 is shown in FIG. 12.

**Table 1**

| | Pore Volume Ratio of Porous Support (%) | | | Pore Volume of Porous Support (cm³/g) | Pore Volume Ratio of Negative Electrode Active Material (%) | | | Pore Volume of Negative Electrode Active Material (cm3/g) |
|---|---|---|---|---|---|---|---|---|
| | Micro pores | Meso pores | Macro pores | | Micro pores | Meso pores | Macro pores | |
| Example 1 | 60% | 30% | 10% | 0.8 | 0% | 80% | 20% | 0.005 |
| Example 2 | 70% | 25% | 5% | 0.85 | 2% | 70% | 28% | 0.0055 |
| Example 3 | 80% | 17% | 3% | 0.9 | 10% | 60% | 30% | 0.006 |
| Example 4 | 90% | 10% | Trace | 0.95 | 10% | 50% | 40% | 0.007 |
| Comparative Example 1 | 10% | 80% | 10% | 1.5 | 10% | 30% | 60% | 0.3 |
| Comparative Example 2 | 20% | 71% | 9% | 1.15 | 20% | 35% | 45% | 0.25 |
| Comparative Example 3 | 30% | 65% | 5% | 1.12 | 25% | 30% | 45% | 0.2 |
| Comparative Example 4 | 40% | 55% | 5% | 1.10 | 35% | 25% | 40% | 0.15 |

### Evaluation Example 4: Specific Capacity Evaluation

The half cells according to Examples 1 to 4 and Comparative Examples 1 to 4 were charged and discharged once at 0.1 C, and the specific capacity was measured. The results are shown in Table 2.

### Evaluation Example 5: Efficiency Evaluation

The rechargeable lithium batteries according to Examples 1 to 4 and Comparative Examples 1 to 4 were charged and discharged once at 0.1 C to determine a ratio of the discharge capacity to the charge capacity. The results are shown in Table 2 in terms of efficiency.

### Evaluation Example 6: Cycle Expansion Rate Evaluation

The rechargeable lithium batteries according to Examples 1 to 4 and Comparative Examples 1 to 4 underwent a formation process by being charged and discharged once at 0.1 C, and then charged and discharged at 50 times 1 C. A ratio of a rechargeable lithium battery thickness after 50 charge and discharge cycles to a rechargeable lithium battery thickness before charging and discharging at 1 C was determined. The results are shown in Table 2 in terms of expansion rate.

### Evaluation Example 7: Cycle-Life Characteristics Evaluation

The rechargeable lithium batteries according to Examples 1 to 4 and Comparative Examples 1 to 4 were charged and discharged at 1 C for 1000 times or more. A point at which the discharge capacity sharply decreased during cycling was defined as a capacity drop point, and the results are shown in Table 2. For each cycle, the capacity retention was calculated as the ratio of the discharge capacity at that cycle to the initial discharge capacity (at 1^{st} cycle). The number of cycles at which the capacity retention reached 80% was defined as the cycle life drop point, and the results are shown in Table 2.

**Table 2**

| | Specific Capacity (mAh/g) | Efficiency (%) | Expansion Rate (%) | Cycle-life drop point (Cycle) |
|---|---|---|---|---|
| Example 1 | 1850 | 90.5 | 11% | 900 |
| Example 2 | 1880 | 92 | 12% | 1000 |
| Example 3 | 1910 | 91.5 | 13% | 950 |
| Example 4 | 1941 | 91.8 | 12% | 900 |
| Comparative Example 1 | 2100 | 87 | 18% | 300 |
| Comparative Example 2 | 2070 | 88 | 17% | 400 |
| Comparative Example 3 | 2030 | 87.5 | 16% | 600 |
| Comparative Example 4 | 2000 | 87 | 15% | 600 |

Referring to Table 2, it can be confirmed that Examples 1 to 4 have a high capacity, a low expansion rate, and excellent or suitable efficiency and cycle-life characteristics.

In contrast, in the case of Comparative Examples 1 to 4 in which a porous support having a low volume ratio of micro pores was utilized and the crystal grain size of silicon was excessively (or substantially) large, although excellent or suitable capacity was achieved, low efficiency and high expansion rate were observed, resulting in significantly or substantially degraded cycle-life characteristics.

As a result, it can be seen that if (e.g., when) the porous support according to one or more embodiments of the present disclosure is utilized and the grain size satisfies the ranges as described in one or more embodiments, efficiency, expansion characteristics, and cycle-life characteristics of the rechargeable lithium battery are improved or enhanced.

A negative electrode active material according to one or more embodiments of the present disclosure and the rechargeable lithium battery including the negative electrode active material may have excellent or suitable capacity (e.g., electrical capacity), efficiency, and cycle-life characteristics.

According to a method for manufacturing a negative electrode active material according to one or more embodiments of the present disclosure, a negative electrode active material having excellent or suitable capacity (e.g., electrical capacity), efficiency, and cycle-life characteristics may be manufactured.

For example, the comparative analysis across the examples should demonstrate that the performance of the negative electrode active material is influenced by both (e.g., simultaneously) the pore structure of the porous support and the crystallinity of the silicon. Embodiments utilizing porous supports with a high proportion of micropores (e.g., 60% or more) and silicon with amorphous or near-amorphous characteristics (e.g., crystal grain size of in a range of about 0 to about 0.1 nm) should yield superior results in terms of initial efficiency, structural stability, and cycle-life performance. In contrast, comparative examples with lower micropore ratios and larger silicon crystal grain sizes (e.g., 5-9 nm) exhibited diminished electrochemical performance, including reduced efficiency and poorer capacity retention. These findings validate the critical role of engineered pore architecture and nanoscale amorphous (e.g., non-crystalline) silicon in achieving high-performance negative electrode materials for rechargeable lithium batteries.

A battery (e.g., a rechargeable lithium battery) manufacturing device, a battery management system (BMS) device, and/or any other relevant devices or components according to one or more embodiments of the present disclosure may be implemented utilizing any suitable hardware, firmware (e.g., an application-specific integrated circuit), software, and/or a (e.g., any suitable) combination of software, firmware, and hardware. For example, one or more suitable components of the device may be provided on one integrated circuit (IC) chip or on separate IC chips. Further, one or more suitable components of the device may be implemented on a flexible printed circuit film, a tape carrier package (TCP), a printed circuit board (PCB), and/or provided on one substrate. Further, the one or more suitable components of the device may be a process or thread, running on one or more processors, in one or more computing devices, executing computer program instructions and interacting with other system components to perform the one or more suitable functionalities described herein. The computer program instructions may be stored in a memory which may be implemented in a computing device utilizing a standard memory device, such as, for example, a random access memory (RAM). The computer program instructions may also be stored in other non-transitory computer readable media, such as, for example, a CD-ROM, a flash drive, and/or the like. Also, a person of skill in the art should recognize that the functionality of one or more suitable computing devices may be combined or integrated into a single computing device, or the functionality of a particular computing device may be distributed across one or more other computing devices without departing from the scope of the present disclosure.

A person of ordinary skill in the art, in view of the present disclosure in its entirety, would appreciate that each suitable feature of the one or more embodiments of the present disclosure may be combined or combined with each other, partially or entirely, and may be technically interlocked and operated in one or more suitable ways, and each embodiment may be implemented independently of each other or in conjunction with each other in any suitable manner unless otherwise stated or implied.

While the subject matter of the present disclosure has been described in connection with what is presently considered to be practical example embodiments, it is to be understood that the present disclosure is not limited to the disclosed embodiments, but, in one or more embodiments, is intended to cover one or more suitable modifications and equivalent arrangements included within the spirit and scope of the appended claims and equivalents thereof. It therefore will be understood that one or more embodiments described herein are just illustrative but not limitative in all aspects.

## Claims

1. A negative electrode active material (AM) comprising:
a core; and
a carbon coating layer (CTL) on the core,
wherein the core comprises:
a porous support (PMT) comprising a plurality of pores (POR) and a first amorphous carbon; and
a silicon on the plurality of pores (POR) and a surface of the porous support (PMT) and comprising an amorphous silicon, and
wherein,
the plurality of pores (POR) comprises micro pores, and
a volume ratio of the micro pores of the porous support (PMT) is ≥ 50% to ≤ 100% based on a total pore volume of the porous support (PMT).

2. The negative electrode active material (AM) as claimed in claim 1, wherein the first amorphous carbon comprises at least one of activated carbon, carbon nanotubes, carbon nanowires, graphene, carbon fibers, furnace black, carbon black, acetylene black, Denka black, Ketjen black, or a combination thereof.

3. The negative electrode active material (AM) as claimed in claim 1 or 2, wherein an average pore diameter of the porous support (PMT) is greater than 0 and less than or equal to 10 nm.

4. The negative electrode active material (AM) as claimed in any one of claims 1 to 3, wherein the total pore volume of the porous support (PMT) is ≥ 0.5 cm³/g to ≤ 1 cm³/g.

5. The negative electrode active material (AM) as claimed in any one of claims 1 to 4, wherein an amount of the porous support (PMT) is ≥ 30 wt% to ≤ 80 wt% based on 100 wt% of the negative electrode active material (AM).

6. The negative electrode active material (AM) as claimed in any one of claims 1 to 5, wherein the silicon is uniformly distributed from a center of the porous support (PMT) toward the surface of the porous support (PMT).

7. The negative electrode active material (AM) as claimed in any one of claims 1 to 6, wherein the silicon has a grain size of 4 nm or less as measured by X-Ray Diffraction (XRD).

8. The negative electrode active material (AM) as claimed in any one of claims 1 to 7, wherein an amount of the silicon is ≥ 10 wt% to ≤ 70 wt% based on 100 wt% of the negative electrode active material (AM).

9. The negative electrode active material (AM) as claimed in any one of claims 1 to 8, wherein the carbon coating layer (CTL) comprises a second amorphous carbon, and
wherein the second amorphous carbon comprises at least one of soft carbon, hard carbon, mesophase pitch carbide, calcined coke, or a combination thereof.

10. The negative electrode active material (AM) as claimed in any one of claims 1 to 9, wherein a thickness of the carbon coating layer (CTL) is ≥ 1 nm to ≤ 100 nm.

11. The negative electrode active material (AM) as claimed in any one of claims 1 to 10, wherein the plurality of pores (POR) further comprises meso pores, and
wherein a volume ratio of the meso pores of the porous support (PMT) is 40% or less based on the total pore volume of the porous support (PMT).

12. A negative electrode (20) comprising:
a negative electrode current collector (COL2); and
a negative electrode active material layer (AML2) on the negative electrode current collector (COL2) and comprising a negative electrode active material (AM),
wherein the negative electrode active material (AM) comprises a core and a carbon coating layer (CTL) on the core,
wherein the core comprises:
a porous support (PMT) comprising a plurality of pores (POR); and
a silicon on the plurality of pores (POR) and a surface of the porous support (PMT), and
wherein,
the negative electrode active material (AM) further comprises meso pores, and
a volume ratio of the meso pores of the negative electrode active material (AM) is 50% to 100% based on a total pore volume of the negative electrode active material (AM).

13. The negative electrode (20) as claimed in claim 12, wherein the negative electrode active material (AM) further comprises micro pores, and
wherein a volume ratio of the micro pores of the negative electrode active material (AM) is 20% or less based on the total pore volume of the negative electrode active material (AM).

14. The negative electrode (20) as claimed in claim 12 or 13, wherein the total pore volume of the negative electrode active material (AM) is greater than 0 cm³/g and less than or equal to 0.1 cm³/g.

15. A method, the method comprising:
preparing a porous support (PMT) comprising a plurality of pores (POR);
performing a vapor deposition process utilizing a silicon precursor on the porous support (PMT) to form a silicon; and
forming a carbon coating layer (CTL) on the porous support (PMT) having the silicon thereon, utilizing a carbon precursor,
wherein,
the plurality of pores (POR) comprises micro pores, and
a volume ratio of the micro pores of the porous support (PMT) is ≥ 50% to ≤ 100% based on a total pore volume of the porous support (PMT), and
wherein the method is a method for manufacturing a negative electrode active material (AM).
